# EUROPÄISCHE PATENTSCHRIFT

(11) **EP 1 086 883 B1**
(45) Veröffentlichungstag und Bekanntmachung des Hinweises auf die Patenterteilung: **18.07.2007**
(21) Anmeldenummer: 00120525.1
(22) Anmeldetag: 20.09.2000
(51) Int. Cl.: B62D 25/12, E05D 5/02, E05D 5/06

(54) **Scharnier für Türen, Klappen oder dergleichen von Fahrzeugen mit einer Befestigungsvorrichtung**
Hinge for doors, flaps or the like of vehicles with a mounting device
Charnière pour portes, volets ou analogues de véhicules avec un dispositif de fixation

(30) Priorität: 25.09.1999 DE 19946014
(43) Veröffentlichungstag der Anmeldung: 28.03.2001
(73) Patentinhaber: Bayerische Motoren Werke Aktiengesellschaft, 80809 München (DE)
(72) Erfinder: Mieslinger, Stefan, 84034 Landshut (DE)

(56) Entgegenhaltungen:
- DE-A- 19 717 027
- DE-A- 19 852 234

## Beschreibung

Die Erfindung betrifft ein Scharnier für Türen, Klappen oder dergleichen von Fahrzeugen mit einer Befestigungsvorrichtung gemäß dem Oberbegriff des Anspruchs 1.

Aus der DE 31 00 138 C3 ist bereits eine Scharnierbefestigung für Kraftfahrzeugtüren bekannt, bei der ein Scharnierflügel einer Scharnierbefestigung an einem Tür- oder Öffnungsrahmen der Fahrzeugkarosserie über eine Hilfsplatte, eine Schraube und eine im Scharnierflügel ausgebildete Mutter bzw. über ein Innengewinde befestigt ist. Diese bekannte Scharnierbefestigung baut jedoch relativ aufwendig.

Die aus der DE-A-197 17 027 bekannte Verschraubung eines ersten Scharnierflügels für eine Fahrzeugtür wird mit mindestens zwei Schamierhalteschrauben an einer Wandung einer Tür oder eines Türholmes angeschraubt. Die Scharniernatteschrauben werden in Gewindelöcher verschraubt, die in einer ausrichtbaren Gewindeplatte ausgebildet sind. Zusätzlich zu den beiden Schamierhalteschrauben ist mindestens eine gesonderte Fixierschraube vorgesehen, die ebenfalls in der Gewindeplatte verschraubt ist. Die vorbekannte Verschraubung benötigt somit mindestens drei Schrauben, die zur Befestigung oder zur Fixierung dienen.

Aufgabe der Erfindung ist es, ein Scharnier für Türen, Klappen oder dergleichen von Fahrzeugen mit einer Befestigungsvorrichtung zu schaffen, die einen einfachen Aufbau aufweist.

Diese Aufgabe wird durch die Merkmale des Anspruchs 1 gelöst.

Bei der erfindungsgemäßen Befestigungsvorrichtung wird durch die Verwendung einer Spannhülse mit großen Hebelarmen erreicht, dass zumindest in der Hauptbelastungsrichtung bzw. in den Hauptbelastungsrichtungen das an dem Scharnierflügel anliegende Karosserieblech oder dergleichen auch an den äußeren Rändern oder Enden des betreffenden Scharnierflügelabschnittes anliegt.

Bei einer erfindungsgemäßen Ausführungsform kann über die Spannhülse eine derartige Vorspannung durch die Verwendung einer einzigen Schraube erreicht werden, dass eine zweite Befestigungsschraube nicht mehr erforderlich ist. Bei dererfindungsgemäßen Befestigungsvorrichtung ist ferner von Vorteil, dass sich durch die Verwendung nur einer einzigen Schraube und/oder durch die geringe Anzahl der verwendeten Teile sich die Montagezeit verringert. Ferner wird durch die erfindungsgemäße Befestigungsvorrichtung die Krafteinleitung verbessert, so dass eine Dickenreduzierung an den Befestigungsstellen für die Scharniere möglich ist.

In vorteilhaften Ausführungsformen ist die Spannhülse symmetrisch oder unsymmetrisch aufgebaut. In einer vorteilhaften Ausführungsform weist die Spannhülse einen kegelförmigen oder konusförmigen Querschnitt auf. In einer weiteren vorteilhaften Ausführungsform ist an der Spannhülse eine Mutter oder ein Innengewinde zum Verschrauben der Befestigungsschraube lose angeordnet oder in der Spannhülse integriert.

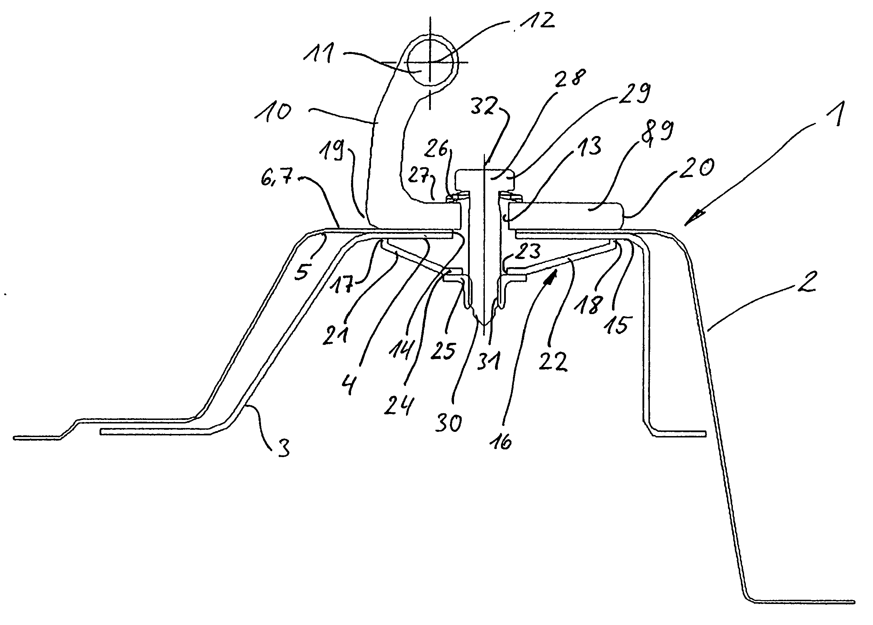

Eine Ausführungsform der Erfindung wird nachstehend anhand der einzigen Figur beispielshalber beschrieben, die eine Querschnittsansicht eines an einer Karosserie befestigten Scharnierflügels zeigt.

In der einzigen Figur ist ein Tür- oder Öffnungsrahmen 2 eines Seitenrahmens einer Karosserie eines nicht weiter dargestellten Fahrzeuges 1 abgebildet, der einen hutförmigen Querschnitt aufweist. In diesem Tür- oder Öffnungsrahmen 2 ist ein Verstärkungsprofil 3 angeordnet, das mit einem ebenen Abschnitt 4 an einer Innenwand 5 eines ebenfalls ebenen Abschnittes 6 des Tür- oder Öffnungsrahmens 2 anliegt. An einer Außenwand 7 des Tür- oder Öffnungsrahmens 2 liegt ein ebener Abschnitt 8 eines Scharnierflügels 9 an.

In einem zu dem ebenen Abschnitt 8 des Scharnierflügels 9 abgewinkelten Abschnitt 10 des Scharnierflügels 9 ist eine Durchgangsöffnung 11 zur Aufnahme eines Zapfens oder dergleichen vorgesehen. Die Symmetrieachse 12 der Durchgangsöffnung 11 ist gleichzeitig die Scharnierachse, um die ein zweiter, nicht dargestellter Scharnierflügel schwenkbar ist. Der zweite Scharnierflügel ist an einer ebenfalls nicht dargestellten Tür oder Klappe des Fahrzeuges 1 befestigt.

Der ebene Abschnitt 8 des Scharnierflügels 9 weist eine Durchgangsöffnung 13 auf. An der dazu gegenüberliegenden Stelle ist im Tür- oder Öffnungsrahmen 2 und im Verstärkungsprofil 3 ebenfalls eine Öffnung 14 vorgesehen. In der gezeigten Ausführungsform liegt auf einer Innenwand 15 des Verstärkungsprofils 3 eine Spannhülse 16 über ihre Abstützflächen 17, 18 an. Die in der Figur gezeigten gegenüberliegenden Abstützflächen 17, 18 befinden sich in etwa in Höhe der seitlichen Enden 19, 20 des ebenen Abschnittes 8 des Scharnierflügels 9. In einer vorteilhaften Ausführungsform liegen in Höhe der weiteren, nicht dargestellten seitlichen Enden des ebenen Abschnittes 8 des Scharnierflügels 9 ebenfalls nicht dargestellte Abstützflächen der Spannhülse 16 an.

Die in der Figur gezeigte Spannhülse 16 weist einen unsymmetrischen, kegel- oder konusförmigen Querschnitt mit unterschiedlich langen Hebelarmen 21, 22 auf. In einer anderen Ausführungsform ist die Spannhülse 16 symmetrisch und mit gleich langen Hebelarmen ausgebildet. Die Spannhülse 16 ist mit einer Durchgangsöffnung 23 versehen, an der eine Stirnfläche 24 zur Anlage oder Anordnung einer Mutter 25 ausgebildet ist. In einer anderen Ausführungsform ist ein Innengewinde 31 einteilig an der Spannhülse 16 zur Befestigung der Schraube 28 ausgebildet. Durch die Durchgangsöffnungen 13, 14, 23 des Scharnierflügels 9, des Tür- oder Öffnungsrahmens 2, des Verstärkungsprofiles 3 und der Spannhülse 16 sowie durch eine Unterlegscheibe 26, die auf einer Außenoberfläche 27 des ebenen Abschnittes 8 des Scharnierflügels 9 aufliegt, wird eine Befestigungsschraube 28 mit einer Symmetrieachse 32 hindurchgeführt. Ferner kann in einer Ausführungsform die Unterlegscheibe 26 weggelassen werden. Die Befestigungsschraube 28 wird mit der Mutter 25 verschraubt. Im verschraubten Zustand liegt die Befestigungsschraube 28 mit ihrem Schraubenkopf 29 an der Unterlegscheibe 26 an. Die Länge der Befestigungsschraube 28 ist in der gezeigten Ausführungsform so ausgelegt, dass ein vorderes Ende 30 der Schraube 28 über die gesamte Länge eines Innengewindes 31 der Mutter 25 verschraubt ist.

## Patentansprüche

1. Scharnier für Türen, Klappen oder dergleichen von Fahrzeugen, mit einer Befestigungsvorrichtung, wobei ein erster Scharnierflügel über Befestigungsmittel der Befestigungsvorrichtung an einem Tür- oder Öffnungsrahmen einer Fahrzeugkarosserie angeordnet ist und ein zweiter Scharnierflügel über eine Scharnierachse mit dem ersten Scharnierflügel schwenkbar verbunden ist, wobei der zweite Scharnierflügel an der Tür oder der Klappe des Fahrzeuges befestigt ist,
**dadurch gekennzeichnet, dass** die Befestigungsmittel aus einer einzigen Schraube (28), einer Spannhülse (16) mit gegenüberliegenden Abstützflächen (17, 18), die sich im montierten Zustand in Höhe seitlicher Enden (19,20) eines ebenen Abschnittes (8) des Scharnierflügels (9) befinden, und einer Mutter (25) bestehen und dass über die Schraube (28) und die Abstützflächen (17, 18) der Spannhülse (16) eine Vorspannkraft auf den Tür- oder Öffnungsrahmen oder dergleichen (2, 3) in Höhe der seitlichen Enden (19, 20) des ebenen Abschnittes (8) des ersten Scharnierflügels (9) im montierten Zustand einstellbar ist.

2. Scharnier nach Anspruch 1,
**dadurch gekennzeichnet, dass** sich die Schraube (28) mit ihrem Schraubenkopf oder dergleichen (29) an einem ebenen Abschnitt (8) des ersten Scharnierflügels (9) abstützt und dass die Abstützflächen (17, 18) der Spannhülse (16) in Höhe der gegenüberliegenden, seitlichen Enden (19, 20) des ebenen Abschnittes (8) des ersten Scharnierflügels (9) auf einem Tür- oder Öffnungsrahmen oder dergleichen (2, 3) aufliegen.

3. Scharnier nach den Ansprüchen 1 oder 2,
**dadurch gekennzeichnet, dass** die Spannhülse (16) einen kegel- oder konusförmigen Querschnitt aufweist.

4. Scharnier nach einem der vorhergehenden Ansprüche,
**dadurch gekennzeichnet, dass** die Spannhülse (16) in Bezug auf eine Symmetrieachse (32) der Befestigungsschraube (28) symmetrisch oder unsymmetrisch mit unterschiedlich langen Hebelarmen (21, 22) ausgebildet ist.

5. Scharnier nach einem der vorhergehenden Ansprüche,
**dadurch gekennzeichnet, dass** die Spannhülse (16) an einer Stirnfläche (24) eine Durchgangsöffnung (23) aufweist, an der eine Mutter (25) mit einem Innengewinde (31) angeordnet ist.

6. Scharnier nach einem der vorhergehenden Ansprüche,
**dadurch gekennzeichnet, dass** die Mutter (25) ein separates Bauteil ist oder dass die Mutter (25) in der Spannhülse (16) integriert ist.

## Claims

1. A hinge for doors, tailgates or the like of motor vehicles, comprising a fastening device, a first hinge leaf being mounted, via fastening means on the fastening device, on the frame of a door or opening of the vehicle body, and a second hinge leaf being pivotably connected to the first leaf by a hinge pin, wherein the second leaf is fastened to the vehicle door or tailgate, **characterised in that** the fastening means comprises a nut (25), a single screw (28), and a clamping sleeve (16) with opposite abutting surfaces (17, 18) which when assembled are level with side ends (19, 20) of a flat portion (8) of the leaf (9), and a prestressing force on the door frame or opening frame or the like (2, 3) at the level of the side ends (19, 20) of the flat portion (8) of the first leaf (9) is adjustable via the screw (28) and the abutting surfaces (17, 18) of the clamping sleeve (16) after assembly.

2. A hinge according to claim 1,
**characterised in that** the head or the like (29) of the screw (28) abuts a flat portion (8) of the first hinge leaf (9), and the abutting surfaces (17, 18) of the sleeve (16) rest on a door frame or opening frame or the like (2, 3) at the level of the opposite side ends (19, 20) of the flat portion (8) of the first hinge leaf (9).

3. A hinge according to claim 1 or claim 2,
**characterised in that** the sleeve (16) has a conical or tapering cross-section.

4. A hinge according to any of the preceding claims,
**characterised in that** the sleeve (16) is symmetrical or asymmetrical with lever arms (21, 22) of different lengths, relative to an axis of symmetry (32) of the fastening screw (28).

5. A hinge according to any of the preceding claims,
**characterised in that** on an end face (24) the sleeve (16) has a passage or opening (23) in which a nut (25) with an internal thread (31) is disposed.

6. A hinge according to any of the preceding claims,
**characterised in that** the nut (25) is a separate component, or the nut (25) is incorporated in the sleeve (16).

## Revendications

1. Charnière pour portes, volets ou analogues de véhicules avec un dispositif de fixation, dont une première patte de charnière est montée à l'aide d'un moyen de fixation du dispositif de fixation au cadre de porte ou d'ouverture d'une carrosserie de véhicule et une seconde patte de charnière est reliée de manière pivotante par un axe de charnière avec la première patte de charnière, la seconde patte étant fixée à la porte ou au volet du véhicule,
**caractérisée en ce que**
les moyens de fixation se composent d'une unique vis (28), d'une douille de serrage (16) avec des surfaces d'appui opposées (17, 18) qui en état monté se trouvent à la hauteur des extrémités latérales (19, 20) d'un segment plan (8) de la patte de charnière (9) et d'un écrou (25), et **en ce qu'**à l'aide de la vis (28) et des surfaces d'appui (17, 18) de la douille de serrage (16), on applique une force de précontrainte sur le cadre de porte ou d'ouverture ou équivalent (2, 3) à hauteur des extrémités latérales (19, 20) du segment plan (8) du premier battant de charnière (9) à l'état monté.

2. Charnière selon la revendication 1,
**caractérisée en ce que**
la vis (28) s'appuie avec sa tête de vis ou équivalent (29) sur un segment plan (8) de la première patte de charnière (9) et les surfaces d'appui (17, 18) de la douille de serrage (16) reposent sur le cadre de porte ou d'ouverture à hauteur des extrémités latérales opposées (19, 20) du segment supérieur (8) de la première patte de charnière (9).

3. Charnière selon l'une quelconque des revendications 1 ou 2,
**caractérisée en ce que**
la douille de serrage (16) a une section en forme de coin ou de cône.

4. Charnière selon l'une quelconque des revendications précédentes,
**caractérisée en ce que**
la douille de serrage (16) est asymétrique ou symétrique avec des bras de levier (21, 22) de longueurs différentes par rapport à l'axe de symétrie (32) de la vis de fixation (28).

5. Charnière selon l'une quelconque des revendications précédentes,
**caractérisée en ce que**
la douille de serrage (16) présente un orifice de passage (23) à une face frontale (24), avec un écrou (25) à filetage intérieur (31).

6. Charnière selon l'une quelconque des revendications précédentes,
**caractérisée en ce que**
l'écrou (25) est une pièce de construction séparée ou l'écrou (25) est intégré dans la douille de serrage (16).
